(19) Europäisches Patentamt / European Patent Office / Office européen des brevets

(11) **EP 1 170 650 B1**

(12) **FASCICULE DE BREVET EUROPEEN**

(45) Date de publication et mention
de la délivrance du brevet:
**03.09.2008   Bulletin 2008/36**

(51) Int Cl.:
***G05B 23/02*** *(2006.01)*

(21) Numéro de dépôt: **00410069.9**

(22) Date de dépôt: **05.07.2000**

(54) **Procédé de surveillance d'un système**

Verfahren zur Systemüberwachung

Method for system monitoring

(84) Etats contractants désignés:
**DE FR GB IT**

(43) Date de publication de la demande:
**09.01.2002   Bulletin 2002/02**

(73) Titulaire: **PDF Solutions SAS**
**34090 Montpellier (FR)**

(72) Inventeur: **Azencott, Robert**
**75010 Paris (FR)**

(74) Mandataire: **de Beaumont, Michel**
**1, rue Champollion**
**38000 Grenoble (FR)**

(56) Documents cités:
**WO-A-00/10059**          **DE-A- 19 755 133**
**US-A- 5 586 066**         **US-A- 5 819 202**

**Description**

La présente invention concerne un procédé de surveillance d'un système complexe dans le but de fournir des aides à la décision pour le suivi, l'évaluation quantifiée, la fusion et l'anticipation de performances du système.

On s'intéresse à des systèmes associables à une base de données informatisées dans laquelle on enregistre à des rythmes temporels variés les valeurs numériques courantes d'un groupe de variables numérisées appelées ici indicateurs de performances.

Cette base de données d'indicateurs de performances doit pouvoir être gérée par un des nombreux systèmes commercialisés de gestion de bases de données (SGBD) comme par exemple ORACLE, IP21 etc. Elle peut être du type "base de données temps réel", mais elle peut aussi être du type "base de données statique" avec remise à jour périodique ou interactive pour actualisation.

Le système dont on veut analyser les performances peut par exemple être une chaîne de production industrielle dans des secteurs très variés tels que par exemple :

- la chimie (qualité produit pour un réacteur chimique),
- la pharmacie (automatisation des tests de validation en production de médicaments),
- l'agro-alimentaire (fabrication de levures),
- l'automobile (qualité unitaire des pièces sur processus d'emboutissage)...

Pour cette première gamme d'applications, les indicateurs de performances peuvent être les résultats numériques ou qualitatifs de contrôles techniques et/ou de mesures physiques, effectués régulièrement sur la qualité d'un produit industriel, tels que poids, densités, concentrations chimiques, caractéristiques d'aspects (couleur, transparence, viscosité...), présence et intensité de défauts de fabrication répertoriés, etc.

Le système à analyser pourra également être constitué de parcs de machines outils, de flottes de véhicules ou d'avions, d'installations industrielles diverses, dans des secteurs variés tels que par exemple :

- l'aéronautique (maintenance anticipative centralisée d'une flotte d'avions),
- l'automobile (maintenance anticipative centralisée d'une flotte de véhicules),
- les transports (maintenance anticipative d'une flotte de rames de métro, de trains, d'autobus),
- les composants électroniques (maintenance anticipative du parc de machines outils),
- la télé-opération d'usines (maintenance à distance de micro-usines d'air liquide)...

Pour cette deuxième gamme d'applications, les indicateurs de performances peuvent être les résultats numériques ou qualitatifs de contrôles techniques, inspections périodiques, mesures physiques ou mécaniques, corrections de pannes, révisions techniques, et plus généralement toutes opérations effectuées régulièrement ou exceptionnellement pour assurer le bon état de marche, la fiabilité, et la disponibilité des différentes unités opérationnelles de la flotte ou du parc de machines surveillé. Les indicateurs de performances recenseront donc par exemple des fréquences de types de pannes ou incidents techniques, les valeurs numériques effectives de caractéristiques opérationnelles critiques, des indicateurs physiques de normalité de fonctionnement, etc.

Une troisième gamme d'applications concerne la surveillance informatisée de la qualité de services sur réseaux de télécommunication. Citons, à titre d'exemples, le suivi et la prédiction de qualité de service sur réseaux de téléphonie mobile, et le suivi et la prédiction multi-noeuds des performances de communication sur réseaux informatiques Internet ou Intranet.

Pour cette troisième gamme d'applications, les indicateurs de performances peuvent être les valeurs numériques ou qualitatives de mesures de performances fournies par des capteurs physiques et des systèmes informatiques temps réel, systèmes en général gérés par les équipementiers d'un réseau de téléphonie mobile, ou les intégrateurs responsables de l'installation d'un réseau de communication. Les indicateurs de performances recenseront donc par exemple des fréquences de types de pannes, alarmes, ou incidents techniques, les valeurs numériques effectives de caractéristiques opérationnelles critiques telles que débits d'information, taux d'appels téléphoniques ventilés géographiquement, taux localisés d'appels non servis, des indicateurs physiques localisés de normalité de fonctionnement, etc.

Dans tous ces systèmes, dans l'état actuel de la technique, on surveille de très nombreux indicateurs puis on examine l'évolution de chaque indicateur et l'on essaye de faire des statistiques sur les valeurs de ces indicateurs. Toutefois, ceci nécessite l'intervention permanente d'un ingénieur informaticien face à son ordinateur et à la base de données pour sélectionner les traitements, lancer et évaluer les résultats. Par exemple, dans le cas cité ci-dessus de la surveillance d'un réseau téléphonique, pour vérifier le bon fonctionnement permanent du système, on peut vouloir pour une grande ville telle que Paris surveiller jusqu'à 1200 zones géographiques. Dans chacune des zones géographiques, on surveillera par exemple une dizaine d'indicateurs distincts, tels que des indicateurs de trafic, des indicateurs de nombre d'appels non traités, des indicateurs d'appels à problèmes, des indicateurs d'appels interrompus... Si chacun de ces dix indicateurs est relevé toutes les 5 minutes, on en arrive à devoir analyser toutes les cinq minutes les valeurs nouvelles de près de 12.000 indicateurs distincts (ce qui représente environ 144.000 valeurs nouvelles par heure). Ainsi, en pratique, dans les systèmes actuels, un ingénieur informaticien entraîné ne peut tout au plus surveiller directement qu'un petit nombre de zones géographiques.

On est donc amené soit à réduire le nombre d'indicateurs surveillés, soit à réduire la fréquence de mise à jour de ces indicateurs, d'où il résulte que la prévision d'éventuels défauts résultant d'une dégradation du système devient moins précise et plus difficile. Une des difficultés majeures, qui empêche de faire des synthèses efficaces de groupes d'indicateurs, est notamment liée au fait que les divers indicateurs de performances sont souvent mesurés dans des unités physiques distinctes, variant dans des domaines de valeurs très différents. De plus, pour chacun des indicateurs les valeurs optimales peuvent être des valeurs élevées, ou des valeurs faibles, ou des valeurs voisines d'un point de consigne.

Ainsi, un objet de la présente invention est de faciliter la surveillance des performances d'un système, en vue notamment de prévoir l'éventuelle dégradation de ces performances et d'y pallier, de façon simple et rapide, tout en permettant l'utilisation d'un très grand nombre d'indicateurs, éventuellement de natures différentes.

Un second objet de la présente invention est de faciliter le suivi intelligent et rapide de très grandes bases de données pouvant inclure jusqu'à des centaines de milliers d'indicateurs de performances, en extrayant automatiquement un nombre aussi petit que possible d'indicateurs de performances essentiels, à partir desquels tous les autres indicateurs de performances peuvent être recalculés automatiquement avec une bonne précision.

Un troisième objet de la présente invention est de fournir à partir d'un groupe quelconque d'indicateurs observés, un nouvel indicateur de performance fusionnant de manière auto-adaptative et rigoureuse les informations de performances apportées par chacun des indicateurs du groupe en question, de façon à fournir des informations synthétiques et précises sur les performances d'un sous-ensemble plus ou moins important du système surveillé.

Pour atteindre ces objets, la présente invention prévoit un procédé de surveillance d'un système à partir d'un ensemble de j indicateurs de performances, $X_j(t)$, dont chacun est défini à des instants t successifs, j étant un nombre entier. Ce procédé comprend, pour chaque indicateur $X_j$, les étapes consistant à effectuer une observation d'une suite de s valeurs, s étant un nombre entier, dudit indicateur et classer cette suite selon une liste de référence ordonnée par valeurs croissantes ; et déterminer le rang relatif, $R[X_j(t)]$, dans ladite liste de référence de toute nouvelle valeur $X_j(t)$ dudit indicateur, ce rang relatif étant égal au rang de la nouvelle valeur divisé par le nombre s.

Selon un mode de réalisation de la présente invention, il est en outre prévu de déterminer à partir de chaque rang relatif, $R[X_j(t)]$, un score $S_j(t)$ exprimé sous forme d'un pourcentage d'autant plus petit que la performance est bonne.

Selon un mode de réalisation de la présente invention, le score s'exprime par la formule $S_j(t) = 100\{1 - R[X_j(t)]/s\}$ quand l'indicateur est d'autant plus grand que la performance est bonne.

Selon un mode de réalisation de la présente invention, il est en outre prévu de déterminer à partir de chaque rang relatif $R[X_j(t)]$ un taux d'information $W_j(t)$ proportionnel à la racine carrée de la valeur absolue du logarithme du rang relatif.

Selon un mode de réalisation de la présente invention, le taux d'information (W) est défini à partir d'un score (S) par la succession de formules suivantes :

$$U = S/50$$

si 0 < S < 50

$$U = [100 - S]/50$$

si 50 < S < 100

$$V = -\log U$$

$$W = +\sqrt{2V}$$

si 0 < S < 50

$$W = - \sqrt{2V}$$

si 50 < S < 100

Selon un mode de réalisation de la présente invention, il est en outre prévu, pour un groupe quelconque de k indicateurs initiaux (X1, X2, X3... Xk), de déterminer un nombre r d'indicateurs essentiels, r étant inférieur à k, à partir desquels on peut reconstituer avec une bonne précision tous les indicateurs initiaux dudit groupe, par les étapes consistant à former la matrice des corrélations des taux d'information ; rechercher les valeurs propres de cette matrice ; et déterminer le plus petit nombre entier r tel que la somme des r plus grandes valeurs propres soit très proche de la somme globale L de toutes les valeurs propres de cette matrice, et plus précisément soit supérieure à un pourcentage choisi de la somme globale L ci-dessus.

Selon un mode de réalisation de la présente invention, il est en outre prévu de déterminer les r indicateurs essentiels par les étapes consistant à rechercher, parmi les k vecteurs colonnes de la matrice des corrélations des taux d'information, le groupe de r vecteurs colonnes qui définissent un volume maximal dans un espace à r dimensions ; former la liste LISTOPT des numéros de colonnes des r vecteurs colonnes ainsi déterminés ; et retenir comme indicateurs essentiels les r indicateurs Sj(t) dont l'indice j figure dans la liste LISTOPT ci-dessus.

Selon un mode de réalisation de la présente invention, il est en outre prévu, pour un groupe quelconque de k scores (S1, S2, S3... Sk), de déterminer un score fusionné SF, calculé à partir d'une moyenne pondérée des taux d'information correspondants (W1, W2, W3... Wk), par les étapes consistant à choisir pour chaque score initial Sj un coefficient d'importance Cj, positif ou nul, en s'assurant que la somme de ces coefficients Cj est égale à 1 ; calculer à chaque instant t un taux moyen TAU(t) par moyenne pondérée des k taux d'information Wj(t), le coefficient de pondération du nombre Wj(t) étant le coefficient d'importance Cj ; calculer l'écart type "a" des valeurs prises au cours du temps par le taux moyen TAU(t) à partir des corrélations entre les taux d'information Wj (t) ; renormaliser l'échelle des valeurs prises par le taux moyen TAU(t), en divisant systématiquement ce taux moyen par son écart type "a", ce qui détermine un taux d'information fusionné défini par WF(t) = TAU(t)/a ; et construire un score fusionné SF(t) proportionnel à l'exponentielle d'un multiple négatif fixe du carré du taux d'information fusionné WF(t).

Selon un mode de réalisation de la présente invention, il est en outre prévu, pour un groupe G de k scores arbitraires (S1, S2, S3... Sk), de déterminer un score fusionné SF, calculé à partir de la moyenne ordinaire de r taux d'information essentiels par les étapes consistant à rechercher le nombre r de scores essentiels ; rechercher les r scores essentiels dans le groupe G des k scores ci-dessus, et en déduire les r taux d'information essentiels correspondants ; déterminer à chaque instant t la moyenne ordinaire MOY(t) des r taux d'information essentiels ; calculer l'écart type "a" des valeurs prises au cours du temps par la moyenne MOY(t), à partir des corrélations entre les taux d'information essentiels ; renormaliser l'échelle des valeurs prises par la moyenne MOY(t), en divisant systématiquement cette moyenne par son écart type "a", ce qui détermine un taux d'information fusionné WF(t) = MOY(t)/a ; et construire un score fusionné SF(t) proportionnel à l'exponentielle d'un multiple négatif fixe du carré du taux d'information fusionné WF(t).

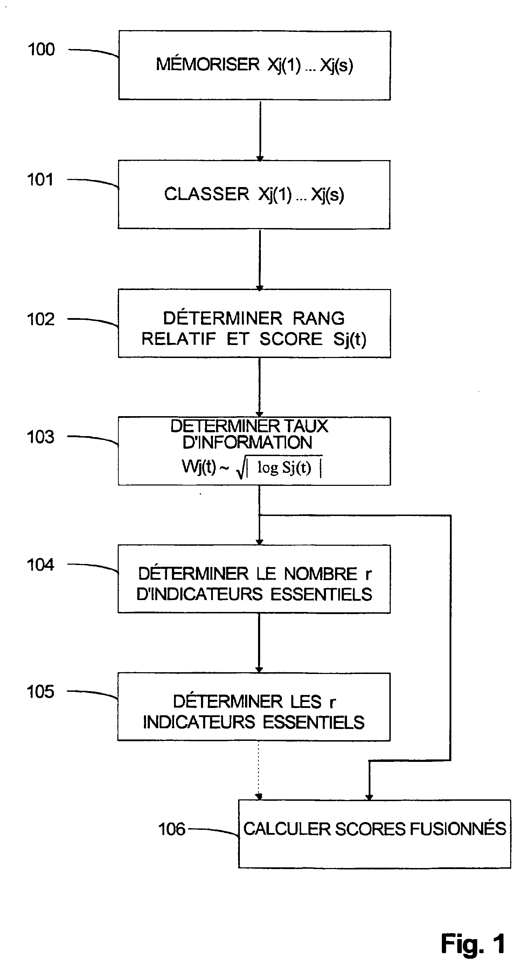

Ces objets, caractéristiques et avantages de la présente invention seront décrits, pour partie, en relation avec un organigramme global illustré en figure 1.

## Premier aspect de l'invention

### Détermination de scores de performances universels

Selon un premier aspect de la présente invention, on cherche à substituer à des indicateurs de performances Xj(t) qui varient de façon quelconque dans le temps, et qui sont éventuellement exprimés en unités physiques fondamentalement différentes, des scores de performances Sj(t) qui correspondent à des valeurs relatives sans dimension, exprimées par exemple en pourcents, et constituant des évaluations de performances fondamentalement comparables d'un score à un autre.

On détermine ainsi par une observation du score associé si la valeur courante d'un indicateur de performance correspond à une valeur prise dans un pourcentage déterminé de meilleures valeurs parmi les valeurs attendues. Les variations de deux indicateurs quelconques pourront alors être facilement quantifiées par les scores associés, et surtout comparées l'une à l'autre à bon escient, même si ces deux indicateurs mesurent des performances distinctes en des unités différentes.

La seule fourniture de ces scores permet donc de suivre de façon commode et d'apprécier de façon comparative rigoureuse un ensemble d'indicateurs de performances et leurs dérives.

Les scores prévus selon l'invention présentent un autre avantage technique : la répartition statistique des valeurs successives prises au cours du temps par un score donné quelconque Sj(t) est toujours une répartition uniforme sur l'intervalle de valeurs comprises entre 0 % et 100 %, alors que la répartition statistique des valeurs successives prises par l'indicateur de performance correspondant Xj(t) suit en général une loi statistique tout à fait inconnue, et totalement différente d'un indicateur à un autre. Le fait que les scores Sj selon l'invention ont la propriété mathématique ci-dessus (même répartition statistique uniforme) joue un rôle technique essentiel dans les évaluations rigoureuses de scores fusionnés présentées selon le troisième aspect de l'invention.

Un mode de réalisation de ce premier aspect de la présente invention va être décrit en relation avec les étapes 100 à 102 de la figure 1.

Dans une première étape, 100, on établit une base d'indicateurs de performances. Comme on l'a indiqué précédemment, ces indicateurs pourront mesurer des performances de natures physiques très différentes, par exemple inclure des pressions, des températures, des viscosités, des rendements, des fréquences... Dans cette base de données, on mémorisera au cours du temps (t), les valeurs successives d'un grand nombre (k) d'indicateurs de performances X1 (t), X2 (t)... Xj (t)... Xk (t).

Dans une deuxième étape, 101, pour chaque indicateur de performance Xj, on isole une liste de référence de s valeurs successives que l'on classe par ordre de valeurs croissantes :

Xj(1), Xj(2) ... Xj(i), Xj (i+1) ... Xj(s),

s étant un nombre entier positif de valeur élevée, par exemple supérieure à 100.

Dans une troisième étape, 102, on définit pour toute nouvelle valeur Xj(t) de chaque indicateur Xj le classement de cette valeur dans la liste de référence Xj(1)... Xj(s) correspondante et on définit un rang relatif associé à cette valeur Xj(t). Le rang relatif R [Xi (t)] est égal au rang de la nouvelle valeur Xj(t) parmi les s valeurs précédemment mémorisées, divisé par le nombre s. Ainsi, si la valeur Xj(t) est comprise entre les deux valeurs consécutives Xj(i), Xj(i+1) de la liste de référence de s valeurs susmentionnée, le rang de Xj(t) sera égal à i et son rang relatif à i/s.

A partir de ce rang relatif, on définit le score Sj(t) associé à l'indicateur Xj(t) comme un pourcentage :

$$Sj(t) = 100\{1-R[Xj(t)]/s\} = 100[1-(i/s)]$$

L'interprétation intuitive du score est clarifiée par l'exemple suivant. Si le score Sj(t) est égal à 4 %, ceci signifie que la performance Xj(t) mesurée au temps t était dans les 4 % meilleures performances par rapport à la liste de référence de l'indicateur Xj concerné. Donc de très faibles valeurs du score correspondent aux très bonnes performances.

Un tel score associé à chaque indicateur convient quand la valeur de la performance mesurée par cet indicateur est considérée comme d'autant meilleure que cet indicateur est plus grand.

Selon une première variante, si l'indicateur de performance X(t) varie en sens inverse de la qualité de performance souhaitable, c'est-à-dire que plus la valeur numérique de X(t) est petite, plus la performance correspondante est souhaitable, on définit un nouvel indicateur de performance par Y(t) = - X(t) et on applique à Y(t) la méthode de calcul ci-dessus pour obtenir le score S(t).

Selon une deuxième variante, si l'indicateur de performance X(t) est une mesure de performance dont l'utilisateur souhaite qu'elle reste aussi proche que possible d'une valeur nominale B, on dénote par Z(t) la valeur absolue de l'écart entre X(t) et B, ce qui constitue un indicateur de performance qui relève de la première variante, de sorte que l'on peut calculer le score S(t) associé à X(t) par application du cas précédent à l'indicateur de performance Z(t).

Subsidiairement, on notera qu'il est possible et simple de recalculer avec une bonne précision la valeur de l'indicateur initial Xj(t) à partir de celle du score associé Sj(t). Pour cela on commence par recalculer à partir du score Sj(t), le rang relatif R[Xj(t)]de Xj(t) dans la liste de référence, ce qui fournit les deux valeurs consécutives de la liste de référence qui encadrent la valeur inconnue Xj(t) que l'on peut alors estimer par la moyenne des deux valeurs consécutives.

**Deuxième aspect de l'invention**

**Extraction des indicateurs de performances essentiels**

Selon un deuxième aspect de l'invention, on détermine des indicateurs de performances essentiels. Ces indicateurs essentiels sont constitués d'un nombre aussi réduit que possible des indicateurs initiaux, à partir desquels les valeurs de tous les autres indicateurs de performances peuvent être reconstituées automatiquement avec une bonne précision. Les scores associés aux indicateurs essentiels seront appelés scores essentiels.

Cette famille d'indicateurs de performances essentiels permet, grâce à sa taille réduite, de faciliter et d'alléger le suivi intelligent et rapide de très grandes bases de données pouvant inclure jusqu'à des centaines de milliers d'indicateurs de performances, car l'information fournie par la famille des indicateurs essentiels suffit à reconstituer tous les indicateurs de performances du système surveillé.

Un mode de réalisation de la détermination de cette famille des indicateurs essentiels va être décrit en relation avec les étapes 103 à 105. Selon cette réalisation, on détermine d'abord le nombre r des indicateurs essentiels et on détermine ensuite seulement quels sont les r indicateurs essentiels.

Dans une étape préalable 103, on calcule pour chaque score S(t) un <u>taux d'information W(t)</u> associé à ce score. Le taux d'information W(t) est défini comme une valeur proportionnelle à la racine carrée de la valeur absolue du logarithme du score S(t). Le fait que les scores présentent une répartition statistique uniforme, comme cela a été indiqué ci-dessus, entraîne, à condition que le nombre d'échantillons préalablement mémorisés pour définir le classement de tout nouvel indicateur soit un entier s suffisamment grand, par exemple supérieur à la centaine, que les taux d'information W(t) auront une distribution probabiliste sensiblement gaussienne.

Un taux d'information Wj(t) (ou pour simplifier W) pourra par exemple être calculé à partir d'un score Sj(t) (ou pour simplifier S) par les formules successives suivantes :

$$U = S/50$$

si $0 < S < 50$

$$U = [100 - S]/50$$

si $50 < S < 100$

$$V = - \log U$$

(V est toujours $\geq 0$)

$$W = + \sqrt{2V}$$

si $0 < S < 50$

$$W = - \sqrt{2V}$$

si $50 < S < 100$

Subsidiairement, on notera que le calcul ci-dessus peut aussi être utilisé en sens inverse, c'est-à-dire qu'on peut reconstituer les valeurs de S à partir des valeurs de W par les formules successives suivantes :

$$V = W^2/2$$

$$U = e^{-V}$$

$$S = 50 \times U$$

si $W > 0$

$$S = 100 - [50 \times U]$$

si $W < 0$

Dans une étape 104, étant donné un groupe quelconque G d'indicateurs de performances X1, X2, X3... Xk, on détermine le nombre r des indicateurs essentiels inclus dans ce groupe G d'indicateurs. Le nombre r sera appelé la dimension effective du groupe d'indicateurs G.

Dans un premier temps, on calcule pour chaque entier j compris entre 1 et k , le score Sj(t), ainsi que le taux d'information associé Wj(t). Les valeurs des taux d'information (W1, W2, W3... Wk) seront disponibles pour des instants t compris entre 1 et N, par exemple.

Par une méthode algorithmique connue, applicable aux variables aléatoires gaussiennes, on calcule la matrice M des corrélations empiriques entre les taux d'information (W1, W2, W3... Wk) ci-dessus, la notion de matrice de corrélations utilisée ici étant définie dans "Multivariate Analysis" (K.V. Mardia, J.T. Kent, J.M. Bibby, Academic Press 1979). La matrice M est une matrice carrée symétrique à k lignes et k colonnes

$$M = [Mij]$$

dont les coefficients numériques Mij sont calculés, pour i et j compris entre 1 et k, par les formules successives suivantes :

$$MOYj = (1/N) \times [somme\ des\ Wj(t)],$$

pour 1<t<N

$$Hj(t) = Wj(t) - MOYj,$$

pour 1<t<N

$$VARj = (1/N) \times [somme\ des\ carrés\ des\ Hj(t)]\ pour\ 1<t<N$$

$$TYPj = \sqrt{VARj}$$

$$Kj(t) = Hj(t)/TYPj$$

$$Mij = (1/N) \times [somme\ des\ Ki(t).Kj(t)]\ pour\ 1<t<N.$$

Ensuite, par des méthodes de calcul connues, on diagonalise explicitement la matrice symétrique M. On calcule les k valeurs propres L1 > L2 > L3 >...> Lk de M (qui sont toujours réelles positives ou nulles). On appelle L la somme de toutes ces valeurs propres.

L'utilisateur du procédé choisit alors un degré de compression COMP qui est un pourcentage généralement compris entre 90 et 99 %, et détermine ensuite le plus petit entier r compris entre 1 et k, tel que :

$$L1 + L2... + Lr > L \times COMP$$

Ce nombre entier r sera appelé dimension effective du groupe G d'indicateurs de performances X1, X2, X3... Xk ci-dessus, ou encore dimension effective du groupe de scores associés (S1, S2, S3... Sk), ou encore dimension effective du groupe de taux d'information associés (W1, W2, W3... Wk).

Ainsi, à l'issue de l'étape 104, on a déterminé le nombre r des indicateurs de performances essentiels.

Dans une étape 105, on prévoit de déterminer la liste de ces r indicateurs essentiels inclus dans le groupe G susmentionné de k indicateurs de performances.

Un premier intérêt pratique de l'extraction de cette famille de r indicateurs essentiels (et des scores essentiels associés) est que cette opération permet très souvent de limiter fortement le nombre effectif d'indicateurs de performances à observer et à mémoriser. En effet l'essentiel de l'information contenue dans l'ensemble des k indicateurs initiaux du groupe G est fournie par les r indicateurs essentiels, et d'ailleurs il est possible, comme on l'expliquera ci-après, de reconstituer avec une bonne précision les valeurs de tous les indicateurs initiaux du groupe G, à partir des seuls indicateurs essentiels.

Pour mettre en oeuvre l'étape 105, on revient à la matrice M de corrélations empiriques susmentionnée, et on calcule les k vecteurs propres Q1, Q2, ... Qk de la matrice M, qui forment nécessairement une base orthonormée.

Ensuite on appelle COL = $(Z_1, Z_2, Z_3, ... Z_k)$ la liste des k vecteurs colonnes de la matrice de corrélations empiriques M, qui sont des vecteurs de même dimension k.

On sélectionne arbitrairement dans la liste COL une sous-famille F de r vecteurs colonnes de M :

$$F = (F_1, F_2, F_3, ... F_r)$$

de sorte que chacun des vecteurs $F_m$ est identique à un vecteur colonne $Z_{im}$ de la liste COL.

On associe à cette sous-famille F une matrice carrée A ayant r lignes et r colonnes, dénotée A = [Aij], les coefficients numériques Aij correspondant aux produits scalaires des vecteurs Fi et Qj, où les entiers i et j varient entre 1 et r.

On définit la qualité Q(F) de la sous-famille F :

$$Q(F) = \text{valeur absolue du déterminant de la matrice A.}$$

Les sous-familles (telles que F) formées de r vecteurs colonnes de M forment un ensemble fini de sous-familles, et il est donc possible de les explorer méthodiquement les unes après les autres pour sélectionner une sous-famille de qualité optimale dénotée $F_{opt}$, telle que la qualité $Q(F_{opt})$ soit maximale parmi tous les nombres Q(F) possibles lorsque F varie dans l'ensemble de toutes les sous-familles formées de r vecteurs colonnes de M.

En d'autres termes, ceci revient à rechercher le groupe de r vecteurs colonnes de la matrice des corrélations empiriques des taux d'information qui définit un volume maximal dans un espace à r dimensions.

En général, une telle sous-famille optimale $F_{opt}$ sera unique ; si elle ne l'est pas, on choisira pour $F_{opt}$ n'importe laquelle des sous-familles optimales trouvées.

Dénotons la sous-famille de vecteurs $F_{opt}$ de la façon suivante :

$$F_{opt} = (Z_{i1}, Z_{i2}... Z_{ir})$$

où les r entiers $(i_1, i_2, i_3... i_r)$ sont compris entre 1 et k, sont distincts, et représentent des numéros de colonnes dans la matrice M.

Nous dénoterons par LISTOPT la liste des r numéros de colonnes déterminée ci-dessus.

$$LISTOPT = (i_1, i_2, i_3... i_r)$$

On appellera alors indicateurs de performances essentiels extraits du groupe d'indicateurs G initial, les indicateurs de performances $X_{i1}, X_{i2} ... X_{ir}$. De même, on appellera scores essentiels les scores correspondants $S_{i1}, S_{i2}... S_{ir}$. Enfin, on appellera taux d'information essentiels les taux d'information correspondants $W_{i1}, W_{i2} ... W_{ir}$.

L'invention prévoit en outre, et de façon optionnelle, de reconstruire, avec une bonne précision, l'ensemble de tous les indicateurs du groupe G initial à partir des seuls indicateurs essentiels extraits du groupe G, selon la méthode de calcul suivante, décrite avec les mêmes notations que dans les étapes 104 et 105 ci-dessus.

Appelons VECT l'espace vectoriel de dimension r engendré par les vecteurs $Z_{i1}, Z_{i2}... Z_{ir}$ de la liste $F_{opt}$.

On commence par calculer par un algorithme mathématique classique, et pour chaque entier j entre 1 et k, le vecteur ZZj obtenu par projection orthogonale du vecteur Zj sur l'espace vectoriel VECT. Ceci permet ensuite de calculer classiquement aussi des coefficients numériques Bjp pour 1<j<k, et 1<p<r, tels que l'on ait :

$$ZZj = \text{somme des } (Bjp \times Z_{ip}),$$

pour 1<p<r

La formule permettant de calculer une bonne estimation WWj (t) pour le taux d'information Wj(t) à partir des taux d'information essentiels Wi1, Wi2... Wir est alors donnée par :

$$WWj(t) = Bj1 \times Wi1(t) + Bj2 \times Wi2(t)... + Bjr \times Wir(t)$$

On peut ensuite estimer approximativement le score Sj(t) à partir de WWj(t) en remplaçant W(t) par WWj(t) et S(t) par Sj(t) dans les formules présentées en relation avec l'étape 103.

Comme les taux d'information essentiels se calculent à partir des scores essentiels, comme indiqué ci-dessus, le procédé ci-dessus fournit donc un mode de calcul estimatif de tous les scores du groupe G initial, à partir des seuls scores essentiels.

Comme indiqué à l'étape 102, chaque indicateur peut se calculer à partir du score correspondant et inversement, de sorte que le procédé ci-dessus fournit aussi un mode de calcul estimatif de tous les indicateurs du groupe G initial, à partir des seuls indicateurs essentiels.

## Troisième aspect de l'invention

## Fusion auto-adaptative de scores

Les scores de performances construits à l'étape 102 sont toujours des pourcentages compris entre 0 % et 100 %, et ont des significations pratiques tout à fait comparables d'un score à un autre, puisqu'ils mesurent des rangs relatifs sur telle ou telle caractéristique physique.

Il est alors naturel de tenter de combiner mathématiquement divers scores, par exemple pour calculer des scores de risques de panne sur un appareillage ou système industriel complexe à partir de scores de risques déjà évalués sur différents composants de cet appareillage ou sous-systèmes du système global.

Ainsi, dans le cas de la surveillance des performances d'un réseau téléphonique, on pourra rechercher à obtenir un nouveau score de performance fusionné par zone géographique ou par sous-ensembles de zones géographiques.

A l'étape 106, selon le troisième aspect de l'invention, on prévoit donc de calculer un nouveau score ou score fusionné SF(t) qui réalise une fusion automatique et rigoureuse de l'ensemble des indications de performances fournies par un groupe initial quelconque d'indicateurs X1(t), X2(t)... Xk(t).

Ce nouveau score SF sera appelé score fusionné du groupe de scores S1, S2... Sk associés aux indicateurs X1, X2... Xk.

L'utilisateur du procédé commence par quantifier l'importance pratique qu'il accorde à chaque score Sj, par exemple en termes de coûts en fixant un coefficient d'importance COEFj positif, ceci pour chaque entier j compris entre 1 et k. Plus ce coefficient d'importance sera grand, plus le score correspondant jouera un rôle important dans l'évaluation du score fusionné SF(t).

La détermination du score fusionné SF(t) se déroule en six opérations successives.

La première opération est de normaliser les coefficients d'importance pour que leur somme soit égale à 1.

On appelle TOT la somme des nombres COEFj pour j variant de 1 à k , puis on calcule des coefficients d'importance normalisés Cj = COEFj/TOT.

La deuxième opération est de calculer ensuite pour chaque indicateur de performance le taux d'information Wj(t) associé, pour des instants t compris entre 1 et N par exemple.

La troisième opération consiste à définir le taux moyen TAU(t) obtenu par moyenne pondérée des taux d'information Wj(t), moyenne dans laquelle chaque taux Wj(t) est affecté du coefficient Cj introduit ci-dessus. Ceci se traduit par la formule suivante :

$$\texttt{TAU(t) = Somme des Cj.Wj(t)}$$

pour 1<j<k

La quatrième opération est de déterminer l'écart type "a" des valeurs prises par le taux TAU(t). Le carré "a$^2$" de cet écart type, c'est-à-dire la variance de TAU(t), est calculable par la formule explicite :

$$\texttt{a}^2\ \texttt{= (1/k}^2\texttt{) x [Somme des Mij.Ci.Cj]}$$

pour 1<i, j<k

où les coefficients Mij sont les corrélations empiriques déjà déterminées ci-dessus à l'étape 104.

La cinquième opération est de normaliser l'échelle des valeurs prises par le taux TAU(t), en divisant TAU(t) par son écart type "a" calculé ci-dessus, ce qui détermine un taux d'information fusionné WF (t) = (1/a) x TAU(t).

La sixième opération est de déterminer le score fusionné SF(t), qui se déduit du taux d'information fusionné WF(t) par les formules indiquées en fin d'étape 103, formules qui permettent de reconstituer explicitement un score S à partir de son taux d'information W.

Selon une variante de mise en oeuvre de l'étape 106, si l'utilisateur ne sait pas vraiment quelle importance quantitative explicite COEFj associer au score Sj(t), ce qui sera très souvent le cas en pratique, l'invention prévoit de définir le choix par défaut en se fondant sur l'utilisation des scores essentiels. Ceci a pour but d'éviter des interférences parasites entre scores partiellement ou totalement redondants.

Comme à l'étape 105, on calcule successivement la matrice M des corrélations empiriques entre les taux d'information Wj(t), puis on détermine les r taux d'information essentiels $W_{i1}(t)$, $W_{i2}(t)$ ... $W_{ir}(t)$.

On définit alors des coefficients d'importance par défaut, calculés comme suit :

COEFj = 1/r    si Wj est l'un quelconque des r taux d'information essentiels ;

COEFj = 0     si Wj n'est pas l'un des r taux d'information essentiels.

Avec ces coefficients d'importance par défaut, on peut alors procéder exactement comme on vient de le décrire ci-dessus dans la présentation de l'étape 106, pour aboutir à la détermination d'un score fusionné SF(t).

## Revendications

1. Procédé de surveillance d'un système à partir d'un ensemble de j indicateurs de performances, Xj(t), dont chacun est défini à des instants t successifs, j étant un nombre entier, consistant à effectuer une observation d'une suite de s valeurs, s étant un nombre entier, dudit indicateur pour chaque indicateur Xj, **caractérisé en ce qu'**il comprend en outre les étapes suivantes :

   classer cette suite selon une liste de référence ordonnée par valeurs croissantes ; et
   déterminer le rang relatif, R[Xj(t)], dans ladite liste de référence de toute nouvelle valeur Xj(t) dudit indicateur, ce rang relatif étant égal au rang de la nouvelle valeur divisé par le nombre s.

2. Procédé selon la revendication 1, **caractérisé en ce qu'**il consiste en outre à déterminer à partir de chaque rang relatif, R[Xj(t)], un score Sj(t) exprimé sous forme d'un pourcentage d'autant plus petit que la performance est bonne.

3. Procédé selon la revendication 2, **caractérisé en ce que** le score Sj(t) s'exprime par la formule :

$$Sj(t) = 100\{1 - R[Xj(t)]/s\}$$

quand l'indicateur est d'autant plus grand que la performance est bonne.

4. Procédé selon la revendication 2, **caractérisé en ce qu'**il consiste en outre à déterminer à partir de chaque rang relatif R[Xj(t)] un taux d'information Wj(t) proportionnel à la racine carrée de la valeur absolue du logarithme du rang relatif.

5. Procédé selon la revendication 4, **caractérisé en ce que** le taux d'information (W) est défini à partir d'un score (S) par la succession de formules suivantes

$$U = S/50$$

si 0 < S < 50

$$U = [100 - S]/50$$

si 50 < S < 100

$$V = - \log U$$

$$W = + \sqrt{2V}$$

si 0 < S < 50

$$W = - \sqrt{2V}$$

si 50 < S < 100

**6.** Procédé selon la revendication 4 ou 5, comprenant en outre une étape consistant, pour un groupe quelconque de k indicateurs initiaux (X1, X2, X3... Xk), à déterminer un nombre r d'indicateurs essentiels, r étant inférieur à k, à partir desquels on peut reconstituer avec une bonne précision tous les indicateurs initiaux dudit groupe, **caractérisé en ce qu'**il comprend les étapes suivantes :

> former la matrice des corrélations des taux d'information ;
> rechercher les valeurs propres de cette matrice ; et
> déterminer le plus petit nombre entier r tel que la somme des r plus grandes valeurs propres soit très proche de la somme globale L de toutes les valeurs propres de cette matrice, et plus précisément soit supérieure à un pourcentage choisi de la somme globale L ci-dessus.

**7.** Procédé selon la revendication 6, **caractérisé en ce qu'**il consiste à déterminer les r indicateurs essentiels par les étapes suivantes :

> rechercher, parmi les k vecteurs colonnes de la matrice des corrélations des taux d'information, le groupe de r vecteurs colonnes qui définissent un volume maximal dans un espace à r dimensions ;
> former la liste LISTOPT des numéros de colonnes des r vecteurs colonnes ainsi déterminés ; et
> retenir comme indicateurs essentiels les r indicateurs Sj(t) dont l'indice j figure dans la liste LISTOPT ci-dessus.

**8.** Procédé selon la revendication 4 ou 5, **caractérisé en ce qu'**il consiste pour un groupe quelconque de k scores (S1, S2, S3... Sk), à déterminer un score fusionné SF, calculé à partir d'une moyenne pondérée des taux d'information correspondants (W1, W2, W3... Wk) selon les étapes suivantes :

> choisir pour chaque score initial Sj un coefficient d'importance Cj, positif ou nul, en s'assurant que la somme de ces coefficients Cj est égale à 1 ;
> calculer à chaque instant t un taux moyen TAU(t) par moyenne pondérée des k taux d'information Wj(t), le coefficient de pondération du nombre Wj(t) étant le coefficient d'importance Cj ;
> calculer l'écart type "a" des valeurs prises au cours du temps par le taux moyen TAU(t) à partir des corrélations entre les taux d'information Wj(t) ;
> renormaliser l'échelle des valeurs prises par le taux moyen TAU(t), en divisant systématiquement ce taux moyen par son écart type "a", ce qui détermine un taux d'information fusionné WF, défini par WF(t) = (1/a) x TAU(t) ; et
> construire un score fusionné SF(t) proportionnel à l'exponentielle d'un multiple négatif fixe du carré du taux d'information fusionné WF(t).

**9.** Procédé selon la revendication 7, **caractérisé en ce qu'**il consiste pour un groupe G de k scores arbitraires (S1, S2, S3... Sk), à déterminer un score fusionné SF, calculé à partir de la moyenne ordinaire de r taux d'information essentiels selon les étapes suivantes :

> rechercher selon le procédé de la revendication 6 le nombre r de scores essentiels ;
> rechercher selon le procédé de la revendication 7 les r scores essentiels dans le groupe G des k scores ci-dessus, et en déduire les r taux d'information essentiels correspondants par le procédé de la revendication 5 ;
> déterminer à chaque instant t la moyenne ordinaire MOY(t) des r taux d'information essentiels ;
> calculer l'écart type "a" des valeurs prises au cours du temps par la moyenne MOY(t), à partir des corrélations entre les taux d'information essentiels ;
> renormaliser l'échelle des valeurs prises par la moyenne MOY(t), en divisant systématiquement cette moyenne par son écart type "a", ce qui détermine un taux d'information fusionné WF, tel que WF(t) = (1/a) x MOY(t) ; et

construire un score fusionné SF(t) proportionnel à l'exponentielle d'un multiple négatif fixe du carré du taux d'information fusionné WF(t).

**Claims**

1. A method for monitoring a system based on a set of j performance indicators, Xj(t), each of which is defined at successive times t, j being an integer, consisting in performing an observation of a sequence of s values, s being an integer, of said indicator for each indicator Xj, **characterized in that** it further comprises the steps of:

   reordering this sequence into a reference list ordered by increasing values; and
   determining the relative rank, R[Xj(t)], in said reference list of any new value Xj(t) of said indicator, this relative rank being equal to the rank of the new value divided by number s.

2. The method of claim 1, further consisting of determining, from each relative rank R[Xj(t)], a score Sj(t) expressed in the form of a percentage which decreases as performance improves,

3. The method of claim 2, wherein the score Sj(t) is expressed by formula:

$$Sj(t) = 100\{1 - R[Xj(t)]/s\}$$

   when the indicator increases as performance improves.

4. The method of claim 2, further consisting of determining, from each relative rank R[Xj(t)], an information rate Wj(t) proportional to the square root of the absolute value of the logarithm of the relative rank.

5. The method of claim 4, wherein the information rate (W) is defined from a score (S) by the following succession of formulas:

$$U = S/50$$

   if 0 < S < 50

$$U = [100 - S]/50$$

   if 50 < S < 100

$$V = - \log U$$

$$W = + \sqrt{2}V$$

   if 0 < S < 50

$$W = - \sqrt{2}V$$

   if 50 < S < 100.

6. The method of claim 4 or 5, further including a step which, for any group of k initial indicators (X1, X2, X3... Xk), determines a number r of essential indicators, r being smaller than k, essential indicators from which all initial indicators of said group can be restored with a good precision, including the steps of:

forming the information rate correlation matrix;

computing the eigenvalues of this matrix; and

determining the smallest integer such that the sum of the greatest eigenvalues is very close to the general sum L of all the eigenvalues of this matrix, and more precisely is greater than a chosen percentage of the above general sum L.

**7.** The method of claim 6, further consisting of determining the essential indicators by the steps of:

searching, among the k column vectors of the information rate correlation matrix the group of r column vectors that define a maximum volume in an r-dimensional space;

forming the list. (LISTOPT) of the column numbers of the r column vectors thus determined; and

retaining as the essential indicators the r indicators Sj(t), the index j of which appears in the above list. (LISTOPT)

**8.** The method of claim 4 or 5, further consisting, for any group of k scores (S1, S2, S3 ... Sk), of determining a merged score SF, calculated from a weighted average of the corresponding information rates (W1, W2, W3...... Wk), by the steps of:

choosing for each initial score Sj a positive or null significance coefficient. Cj, while ensuring that the sum of coefficients Cj is equal to 1;

calculating at each time t. an average rate TAU(t) by a weighted average of the k information rates Wj(t), the ponderating coefficient of number Wj(t.) being the significance coefficient Cj;

calculating the standard deviation "a" of the values taken along time by average rate TAU(t) based on the correlations between information rates Wj (t);

rescaling the values taken by the average rate TAU(t), by systematically dividing this average rate by its standard deviation "a", which determines a merged information rate WF defined by WF(t) = (1/a) x TAU(t); and

constructing a merged score SF(t) proportional to the exponential of a fixed negative multiple of the square of the merged information rate WF(t),

**9.** The method of claim 7, further consisting, for a group G of k arbitrary scores (S1, S2, S3... Sk), of determining a merged score SF, calculated from the ordinary average of r essential information rates by the steps of:

searching according to the method of claim 6 the number r of essential scores;

searching according to the method of claim 7 the r essential scores in the group G of the above k scores, and deducing therefrom the r corresponding essential information rates by the method of claim 5;

determining at each time t. the ordinary average MOY(t) of the r essential information rates;

calculating standard deviation "a" of the values taken along time scale by average MOY(t), from the correlations between essential information rates;

resealing the values taken by average MOY(t) by systematically dividing this average by its standard deviation "a", which determines a merged information rate WF, such that WF(t) = (1/a) x MOY(t); and

constricting a merged score SF(t.) proportional to the exponential of a fixed negative multiple of the square of the merged information rate WF(t).

**Patentansprüche**

**1.** Ein Verfahren zum Überwachen eines Systems, basierend auf einem Satz von j Performance-Indikatoren Xj(t), von denen jeder zu aufeinanderfolgenden Zeiten t definiert ist, j eine ganzzahlige Zahl bzw. ein Integer ist, wobei das Verfahren besteht aus dem Durchführen einer Beobachtung von einer Sequenz von s Werten, s eine ganzzahlige Zahl ist, von dem Indikator für jeden Indikator Xj, **dadurch gekennzeichnet, dass** das Verfahren ferner die folgenden Schritte aufweist:

erneutes Ordnen dieser Sequenz in eine Referenzliste, die mit zunehmenden Werten geordnet ist; und

Bestimmen des relativen Ranges R[Xj(t)] in der Referenzliste von jedem neuen Wert Xj(t) von dem Indikator, wobei dieser relative Rang gleich dem Rang von dem neuen Wert dividiert durch die Zahl s ist.

**2.** Verfahren nach Anspruch 1, das ferner besteht aus dem Bestimmen, von jedem relativen Rang R[Xj(t)] eine Auswertung bzw. Score Sj(t) und zwar ausgedrückt in der Form von einem Prozentsatz welcher abnimmt, wenn die Performance zunimmt.

3. Verfahren nach Anspruch 2, wobei der Score Sj(t) ausgedrückt wird, durch die Formel:

$$Sj(t) = 100\{1 - R[Xj(t)]\ /s\ \}$$

wenn der Indikator zunimmt, wenn die Performance zunimmt.

4. Verfahren nach Anspruch 2, das ferner besteht aus dem Bestimmen, von jedem relativen Rang R[Xj(t)] einer Informationsrate bzw. - geschwindigkeit Wj(t) die proportional ist zu der Quadratwurzel von dem Absolutwert von dem Logarithmus von dem relativen Rang.

5. Verfahren nach Anspruch 4, wobei die Informationsrate (W) definiert wird von einem Score (S) durch die folgende Abfolge von Formeln:

$$U = S/50$$

wenn 0 < S < 50

$$U = [100 - S]/50$$

wenn 50 < S < 100

$$V = -\log U$$

$$W = +\sqrt{2V}$$

wenn 0 < S < 50

$$W = -\sqrt{2V}$$

wenn 50 < S < 100

6. Verfahren nach Anspruch 4 oder 5, das ferner einen Schritt beinhaltet, welcher für jede Gruppe von k initialen Indikatoren (X1, X2, X3... Xk) eine Anzahl r von essentiellen Indikatoren bestimmt, wobei r kleiner als k ist, wobei von den essentiellen Indikatoren alle initialen Indikatoren von der Gruppe mit einer guten Genauigkeit wiederhergestellt werden können, und zwar einschließlich der folgenden Schritte:

Bilden der Informationsratenkorrelationsmatrix;
Berechnen der Eigenwerte von dieser Matrix; und
Bestimmen der kleinsten ganzzahligen Zahl r, so dass die Summe von den r größten Eigenwerten sehr nahe der allgemeinen Summe L von allen Eigenwerten von dieser Matrix ist und präziser größer ist als ein gewählter Prozentsatz von der obigen allgemeinen Summe L.

7. Verfahren nach Anspruch 6, das ferner besteht aus dem Bestimmen der r essentiellen Indikatoren, durch die folgenden Schritte:

Suchen, unter den k Spaltenvektoren von der Informationsratenkorrelationsmatrix, die Gruppe von r Spaltenvektoren, die ein maximales Volumen in einem r-dimensionalen Raum definieren;
Bilden der Liste (LISTOPT) von den Spaltenzahlen von den somit bestimmten r Spaltenvektoren; und
Halten bzw. Speichern als die essentiellen Indikatoren die r Indikatoren Sj(t) dessen Index j in der obigen Liste (LISTOPT) erscheint.

**8.** Verfahren nach Anspruch 4 oder 5, das ferner besteht für jede Gruppe von k Scores (S1, S2, S3... Sk) aus Bestimmen eines zusammengeführten Score SF, berechnet aus einem gewichteten Durchschnitt von den korrespondierenden Informationsraten (W1, W2, W3... Wk) durch die folgenden Schritte:

Wählen für jeden initialen Score Sj einen positiv- oder null-signifikanten Koeffizienten Cj, während sichergestellt wird, das die Summe von Koeffizienten Cj, gleich 1, ist;
Berechnen zu jeder Zeit t einer Durchschnittsrate TAU(t) durch einen gewichteten Durchschnitt von den k Informationsraten Wj(t), wobei der abwägende (ponderating) Koeffizient von der Zahl Wj(t) der signifikante Koeffizient Cj ist;
Berechnen der Standardabweichung "a" von den Werten, die über die Zeit genommen worden sind, durch die durchschnittliche Rate von TAU(t) basierend auf den Korrelationen zwischen den Informationsraten Wj(t);
erneutes Skalieren der Werte, die entlang der Durchschnittsrate TAU(t) genommen wurden, und zwar durch systematisches Dividieren dieser Durchschnittsrate durch ihre Standartabweichung "a", was eine zusammengeführte Informationsrate WF bestimmt, definiert durch WF(t) = (1/a) x TAU(t); und
Konstruieren von einem zusammengeführten Score SF(t) proportional zu dem Exponentialen von einem festen negativen Vielfachen von dem Quadrat von der zusammengeführten Informationsrate WF(t).

**9.** Verfahren nach Anspruch 7, das ferner besteht für eine Gruppe G von k willkürlichen bzw. wahlfreien Scores (S1, S2, S3... Sk) aus Bestimmen von einem zusammengeführten Score SF, berechnet aus dem gewöhnlichen Durchschnitt von r essentiellen Informationsraten, durch die folgenden Schritte:

Suchen gemäß des Verfahrens nach Anspruch 6, der Anzahl r von essentiellen Scores;
Suchen gemäß dem Verfahren nach Anspruch 7, der r essentiellen Scores in der Gruppe G von den obigen k Scores und daraus Ableiten der r entsprechenden essentiellen Informationsraten durch das Verfahren nach Anspruch 5;
Bestimmen zu jederzeit t des gewöhnlichen Durchschnitts MOY(t) von den r essentiellen Informationsraten;
Berechnen der Standardabweichung "a" von den Werten, die entlang einer Zeitskala durch den Durchschnitt MOY(t) genommen werden und zwar aus den Korrelationen zwischen essentiellen Informationsraten;
erneutes Skalieren der Werte, die durch den Durchschnitt MOY(t) genommen werden durch systematisches Dividieren dieses Durchschnitts durch seine Standardabweichung "a", welche eine zusammengeführte Informationsrate WF bestimmt, derart dass WF(t) = (1/a) x MOY(t) ist; und
Konstruieren von einem zusammengeführten Score SF(t) proportional zu dem Exponentiellen von einem festen negativen Vielfachen von dem Quadradt von der zusammengeführten Informationsrate WF(t).

```
              ┌─────────────────────────────┐
100 ──────────┤   MÉMORISER Xj(1) ... Xj(s)  │
              └─────────────────────────────┘
                            │
                            ▼
              ┌─────────────────────────────┐
101 ──────────┤    CLASSER  Xj(1) ... Xj(s)  │
              └─────────────────────────────┘
                            │
                            ▼
              ┌─────────────────────────────┐
102 ──────────┤   DÉTERMINER  RANG           │
              │   RELATIF  ET  SCORE  Sj(t)  │
              └─────────────────────────────┘
                            │
                            ▼
              ┌─────────────────────────────┐
              │   DÉTERMINER TAUX           │
103 ──────────┤   D'INFORMATION             │
              │   Wj(t) ~ √| log Sj(t) |    │
              └─────────────────────────────┘
                            │
                            ▼
              ┌─────────────────────────────┐
104 ──────────┤   DÉTERMINER LE NOMBRE r    │
              │   D'INDICATEURS ESSENTIELS  │
              └─────────────────────────────┘
                            │
                            ▼
              ┌─────────────────────────────┐
105 ──────────┤   DÉTERMINER LES r          │
              │   INDICATEURS  ESSENTIELS   │
              └─────────────────────────────┘
                            ┊
                            ▼
              ┌─────────────────────────────┐
       106 ───┤ CALCULER SCORES FUSIONNÉS   │
              └─────────────────────────────┘
```

**Fig. 1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **K.V. MARDIA ; J.T. KENT ; J.M. BIBBY.** Multivariate Analysis. Academic Press, 1979